# EUROPEAN PATENT SPECIFICATION

(11) **EP 2 972 660 B1**
(45) Date of publication and mention of the grant of the patent: **24.07.2019**
(21) Application number: 14765524.5
(22) Date of filing: 14.03.2014
(51) Int. Cl.: G06F 1/32

(54) **CONTROLLING POWER SUPPLY UNIT POWER CONSUMPTION DURING IDLE STATE**
STEUERUNG DES STROMVERBRAUCHS EINER STROMVERSORGUNGSEINHEIT IM RUHEZUSTAND
CONTRÔLE DE LA CONSOMMATION ÉLECTRIQUE D'UNE UNITÉ D'ALIMENTATION ÉLECTRIQUE PENDANT UN ÉTAT DE VEILLE

(30) Priority: 15.03.2013 IN 1123CH2013
(43) Date of publication of application: 20.01.2016
(73) Proprietor: Intel Corporation, Santa Clara, CA 95054 (US)
(72) Inventor: ROTEM, Efraim, 34400 Haifa (IL); GOULD, Benjamin J., 34672 Haifa (IL); HERMERDING II, James G., Vancouver, Washington 98685 (US); RODRIGUEZ, Jorge P., Portland, Oregon 97205 (US); NAVEH, Alon, Sausalito, 94965 California (US); ROSENZWEIG, Nir, 23800 Givat Ella (IL); DEGALAHAL, Vijay S R, Bangalore, DL 560029 (IN)
(74) Representative: HGF Limited
(86) International application number: PCT/US2014/027730
(87) International publication number: WO 2014/143674

(56) References cited:
- US-A1- 2006 101 295
- US-A1- 2008 065 920
- US-A1- 2008 104 436
- US-A1- 2011 078 475
- US-A1- 2011 246 798
- US-A1- 2012 079 304
- US-A1- 2013 047 012
- US-A1- 2013 051 304

## Description

### FIELD

The present disclosure generally relates to the field of electronics. More particularly, an embodiment of the invention relates to controlling Power Supply Unit (PSU) power consumption during idle state.

### BACKGROUND

As integrated circuit (IC) fabrication technology improves, manufacturers are able to integrate additional functionality onto a single silicon substrate. As the number of these functionalities increases, however, so does the number of components on a single IC chip. Additional components add additional signal switching, in turn, generating more heat. The additional heat may damage an IC chip by, for example, thermal expansion. Also, the additional heat may limit usage locations and/or usage applications of a computing device that includes such chips.

For example, a portable computing device may solely rely on battery power for its operations. Hence, as additional functionality is integrated into portable computing devices, the need to reduce power consumption becomes increasingly important, for example, to maintain battery power for an extended period of time. Non-portable computing systems also face cooling and power consumption issues as their IC components use more power and generate more heat.

US 2006/010295 relates to a computer having a CPU which operates with at least two operation modes, comprising: a mode signal output unit outputting an operation mode signal corresponding to the operation mode of the CPU; a CPU power supply supplying power having a voltage level corresponding to the operation mode signal outputted from the mode signal output unit to the CPU; and a control unit controlling the CPU power supply to decrease an equivalent series resistance value to power outputted from the CPU power supply for a predetermined period of time for delay from when switching the operation mode of the CPU has been sensed, based on the operation mode signal outputted from the mode signal output unit.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
Figs. 1, and 4-6 illustrate block diagrams of embodiments of computing systems, which may be utilized to implement various embodiments discussed herein.
Fig. 2 illustrates a block diagram of computing system components, according to some embodiments.
Fig. 3 illustrates a flow diagram according to some embodiments.

### DETAILED DESCRIPTION

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware"), computer-readable instructions organized into one or more programs ("software"), or some combination of hardware and software. For the purposes of this disclosure reference to "logic" shall mean either hardware, software, or some combination thereof.

Generally, the Power Supply Unit (PSU) of computers (such as desktop computers, workstations, etc.) consumes a significant amount of idle power, due to low efficiency in low power states. The CPU (Central Processing Unit) and the platform may have well-managed power states and go into very low power states when not used. The need for scheduled remote maintenance in a corporate environment, together with new features of Always On Always Connected (AOAC), drive the usage mode of keeping computers on all the time. A desktop computer that is plugged into a wall outlet and not turned off completely will continue consuming idle power. Currently, the PSU may not be put in a power savings mode because the required response time for CPU and platform wake up is very fast, compared to the PSU wake-time. The economy of scale with very high number of installed computers makes this a significant problem for both utility bills and the environmental impacts of CO2 emission.

To this end, some of the embodiments discussed herein provide efficient and flexible power management for computing systems and/or processors (including general purpose processors, graphics processors, etc.). In an embodiment, power consumption is managed by controlling an idle state of a PSU, e.g., during a power state such as a platform low power state (e.g., a platform S9 state). One embodiment allows the PSU to enter a power saving "mode" (also referred to as "state" interchangeably herein) at platform idle states (such as S9). As discussed herein, the S9 power saving state may still deliver the requisite voltage to at least portions of the platform (from the PSU) to allow for at least some operations but may use a more efficient mode. For example, this power state may ensure functionality of low power activities but may not drive full power, full performance activity.

Moreover, deep C-states are generally intended for deep sleep, sleep, etc. states of the CPU or package and S-states are generally intended for deep sleep, sleep, etc. states for the platform, e.g., while allowing "pop up" (or relatively quick exit from deep sleep) for communication messages, email synchronization and other "alive like" look and feel, etc. The new S9 sleep state discussed herein allows for long wake up latency, e.g., in the range of tens to hundreds of milliseconds. During this time, the power consumption of the platform is relatively low and therefore the PSU may be put in low power mode such as S9 (which may be similar to an asynchronous mode). In such a power state, the PSU still delivers some power (and therefore maintains some of the functionality to allow for "pop up") but does not allow high current draw (and therefore does not provide full performance).

Generally, each C state may indicate a certain level of functionality. For example, C0 may indicate the processor is operating, C1 may indicate the processor is not executing instructions but may return to an executing state almost instantaneously, etc. While the above discussed C states may apply to processors (and their cores) only, some embodiments may be applied to package or platform level power consumption states (as well as at any level including a processor level, a device level, globally, etc.). More generally, some of the power consumption states may be in accordance with those defined under Advanced Configuration and Power Interface (ACPI) specification, Revision 4.0a, April 5, 2010.

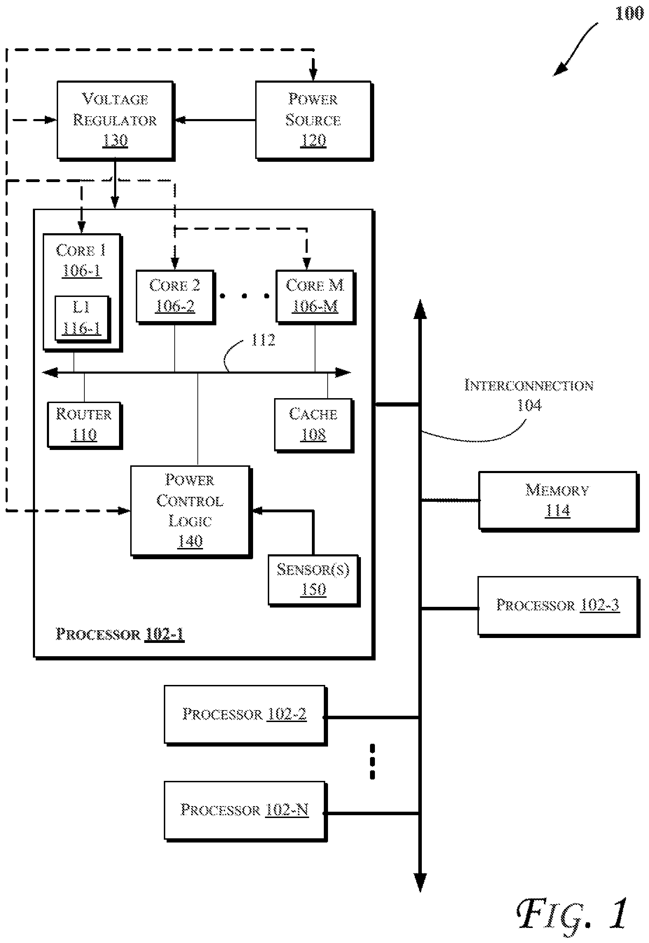

Moreover, some embodiments may be applied in computing systems that include one or more processors (e.g., with one or more processor cores), such as those discussed with reference to Figs. 1-5. More particularly, Fig. 1 illustrates a block diagram of a computing system 100, according to an embodiment of the invention. The system 100 may include one or more processors 102-1 through 102-N (generally referred to herein as "processors 102" or "processor 102"). The processors 102 may communicate via an interconnection or bus 104. Each processor may include various components some of which are only discussed with reference to processor 102-1 for clarity. Accordingly, each of the remaining processors 102-2 through 102-N may include the same or similar components discussed with reference to the processor 102-1.

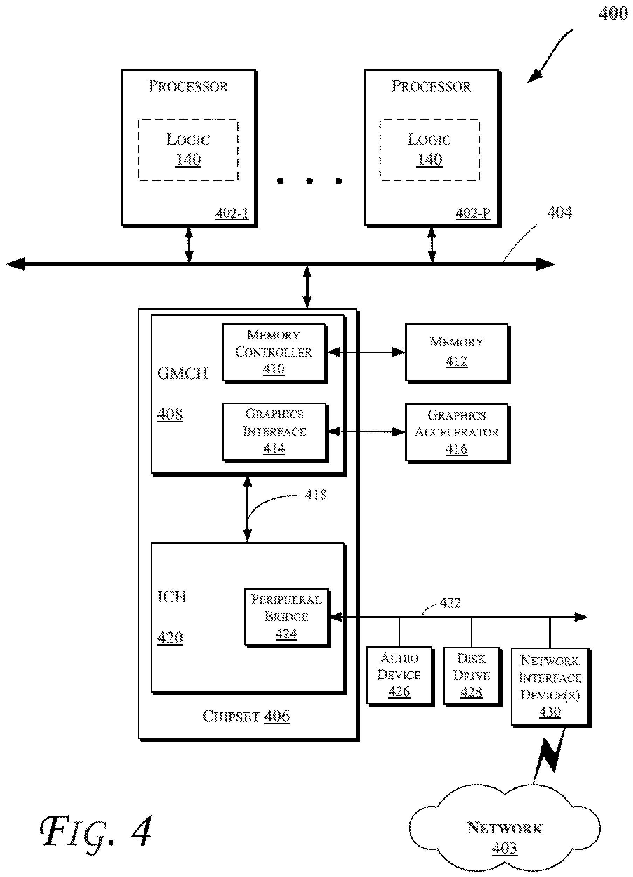

In an embodiment, the processor 102-1 may include one or more processor cores 106-1 through 106-M (referred to herein as "cores 106," or "core 106"), a cache 108, and/or a router 110. The processor cores 106 may be implemented on a single integrated circuit (IC) chip. Moreover, the chip may include one or more shared and/or private caches (such as cache 108), buses or interconnections (such as a bus or interconnection 112), graphics and/or memory controllers (such as those discussed with reference to Figs. 4-5), or other components.

In one embodiment, the router 110 may be used to communicate between various components of the processor 102-1 and/or system 100. Moreover, the processor 102-1 may include more than one router 110. Furthermore, the multitude of routers 110 may be in communication to enable data routing between various components inside or outside of the processor 102-1.

The cache 108 may store data (e.g., including instructions) that are utilized by one or more components of the processor 102-1, such as the cores 106. For example, the cache 108 may locally cache data stored in a memory 114 for faster access by the components of the processor 102 (e.g., faster access by cores 106). As shown in Fig. 1, the memory 114 may communicate with the processors 102 via the interconnection 104. In an embodiment, the cache 108 (that may be shared) may be a mid-level cache (MLC), a last level cache (LLC), etc. Also, each of the cores 106 may include a level 1 (L1) cache (116-1) (generally referred to herein as "L1 cache 116") or other levels of cache such as a level 2 (L2) cache. Moreover, various components of the processor 102-1 may communicate with the cache 108 directly, through a bus (e.g., the bus 112), and/or a memory controller or hub.

The system 100 may also include a platform power source 120 (e.g., a direct current (DC) power source or an alternating current (AC) power source) to provide power to one or more components of the system 100. In an embodiment, the platform power source 120 may be a PSU such as discussed herein. In some embodiments, the power source 120 may include one or more battery packs and/or power supplies. The power source 120 may be coupled to components of system 100 through a voltage regulator (VR) 130. Moreover, even though Fig. 1 illustrates one power source 120 and one voltage regulator 130, additional power sources and/or voltage regulators may be utilized. For example, one or more of the processors 102 may have corresponding voltage regulator(s) and/or power source(s). Also, the voltage regulator(s) 130 may be coupled to the processor 102 via a single power plane (e.g., supplying power to all the cores 106) or multiple power planes (e.g., where each power plane may supply power to a different core or group of cores).

Additionally, while Fig. 1 illustrates the power source 120 and the voltage regulator 130 as separate components, the power source 120 and the voltage regulator 130 may be incorporated into other components of system 100. For example, all or portions of the VR 130 may be incorporated into the power source 120 and/or processor 102.

As shown in Fig. 1, the processor 102 may further include a power control logic 140 to control supply of power to components of the processor 102 (e.g., cores 106). Logic 140 may have access to one or more storage devices discussed herein (such as cache 108, L1 cache 116, memory 114, or another memory in system 100) to store information relating to operations of logic 140 such as information communicated with various components of system 100 as discussed here. As shown, the logic 140 may be coupled to the VR 130 and/or other components of system 100 such as the cores 106 and/or the power source 120.

For example, the logic 140 may be coupled to receive information (e.g., in the form of one or more bits or signals) to indicate status of one or more sensors 150. The sensor(s) 150 may be provided proximate to components of system 100 (or other computing systems discussed herein such as those discussed with reference to other figures including 4 and 5, for example), such as the cores 106, interconnections 104 or 112, components outside of the processor 102, etc., to sense variations in various factors affecting power/thermal behavior of the system/platform, such as temperature, operating frequency, operating voltage, power consumption, and/or inter-core communication activity, etc.

The logic 140 may in turn instruct the VR 130, power source 120, and/or individual components of system 100 (such as the cores 106) to modify their operations. For example, logic 140 may indicate to the VR 130 and/or power source 120 (or PSU) to adjust their output. In some embodiments, logic 140 may request the cores 106 to modify their operating frequency, power consumption, etc. Also, even though components 140 and 150 are shown to be included in processor 102-1, these components may be provided elsewhere in the system 100. For example, power control logic 140 may be provided in the VR 130, in the power source 120, directly coupled to the interconnection 104, within one or more (or alternatively all) of the processors 102, etc. Furthermore, as shown in Fig. 1, the power source 120 and/or the voltage regulator 130 may communicate with the power control logic 140 and report their power specification.

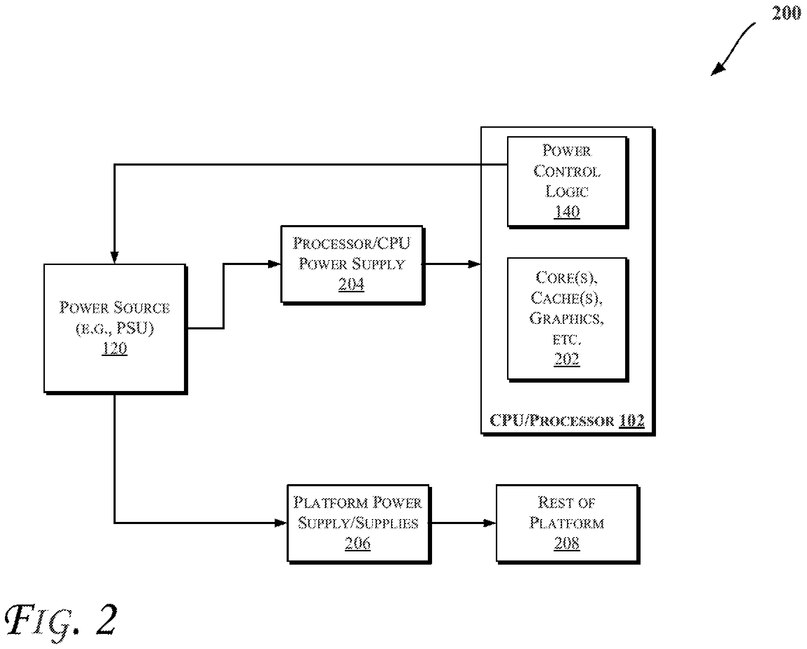

Fig. 2 illustrates a block diagram of a power management system 200, according to an embodiment. The CPU/processor 102 (and the Power Control Logic/Unit 140 in particular) communicates the low power state to the PSU 140, either via one or more dedicated pin(s), a serial bus such as SVID (utilizing a communication protocol for Serial VID provided by Intel® Corporation), HF (High Frequency) modulation over DC line, or other signaling mode. This signaling may also be bi-directional allowing the PSU to signal back ready signal(s) for example.

Referring to Fig. 2, system 200 divides the contents of the processor 102 into control logic 140 and the remaining portions of the processor 202 for simplicity. The power source 120 provides power to a processor/CPU power supply 204 (e.g., to the processor 102 and its components 140/202) and a platform power supply/supplies 206 (e.g., to supply power to the rest of the platform (i.e., other than one or more processors 102, for example). System 200 may also include one or more VRs (shown and discussed with reference to Fig. 1) that are not shown in Fig. 2 for simplicity.

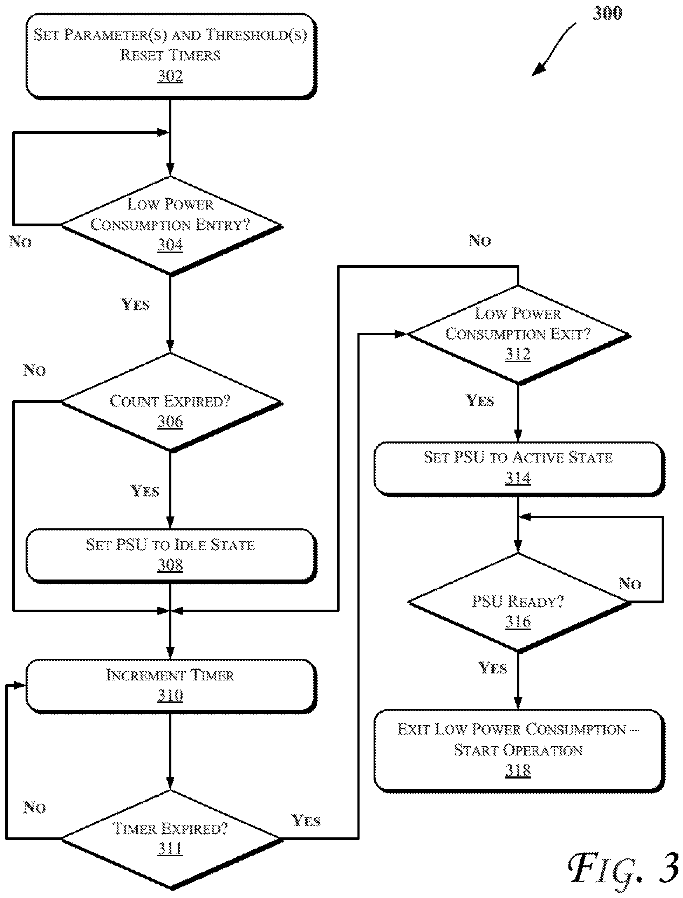

As shown in Fig. 2, the power source 120 may rely on signal(s)/information received from the power control logic 140 to adjust PSU's power state in an embodiment. Some embodiments utilize information available from/in the CPU and/or the platform about the sleep states in order to: (a) communicate to the PSU idle periods when it can enter a sleep state; and/or (b) provide an alert, e.g., early enough to wake up and get ready for CPU operation (as will be further discussed with reference to Fig. 3 below).

Fig. 3 illustrates a flow diagram of an embodiment of a method 300 to control power consumption by a PSU, according to some embodiments. In an embodiment, various components discussed with reference to Figs. 1-2 and 4-5 may be utilized to perform one or more of the operations discussed with reference to Fig. 3 (including for example logic 140).

Referring to Figs. 1-3, at an operation 302, one or more parameter(s) and threshold value(s) may be set (e.g., stored in one or more registers, table entries, and/or in storage device such as those discussed with reference to Figs. 1-3 and 4-5). At operation 302, one or more timers may also be reset. The parameter(s) and/or threshold value(s) may to indicate at which levels/values (e.g., as provided by the processor(s) and/or platform), logic 140 is to cause the PSU 120 to enter a low power consumption state (such as S9). Also, it is understood that operation 302 may be performed dynamically at any time and not only once at system initiation.

In some embodiments, the conditions for entry into S9 (e.g., after operation 304) could be software and/or hardware driven, e.g., in hardware by frequency or C-States (e.g., core and package C-states). For example, at entry to S9 at operation 304, the CPU can put the PSU to sleep state at 308 (e.g., after a count/timer for S9 has expired at 306, based on some counter/timer, to ensure that S9 is not entered too quickly, only to be followed up with some activity that would force the PSU out of S9, as is further discussed below). At an operation 310, a timer is incremented followed by a timer check at operation 311. This allows for hysteresis to make sure performance is not affected too much. Accordingly, in some embodiments, a timer is incremented when PSU is out of the low power consumption state, e.g., not just when in the low power consumption state. In an embodiment, the timer of operation 310 indicates the amount of time the PSU has been in idle state. Upon exit from idle at 312 (e.g., based on a signal/indication that the PSU is to exit the low power consumption state and/or the value of the timer incremented at 310 (or its comparison with a threshold value at operation 311) that indicates the PSU is not exiting too early), the PSU is activated at 314 and method 300 waits at 316, either for a pre-defined time (e.g., as determined by a timer) or based on an indication (e.g., based on some "ready" signal as described with reference to Fig. 2) that the PSU is ready for full performance/functionality. In an embodiment, CPU activation may be held/blocked until PSU is properly up and running (or otherwise until PSU is fully operational) as determined by operation 316. After operation 316, method 300 exits the low power state at operation 318.

As discussed above, timer(s)/counter(s) may be added for the flow of method 300 (e.g., for operations 306, 310, 311, and/or 312), e.g., to control the frequency/frequentness of entry (or how often entry is made) to a low power consumption state (e.g., S9 state) and/or frequency/frequentness of exit (or how often exit is made) from the low power consumption state (e.g., S9 state). Namely, too frequently entering and/or exiting a low power state can hurt performance/efficiency due to the additional exit latency and may end up in a net energy loss.

The net energy loss may be in part because of the energy lost during such transitions and by keeping the CPU up longer than needed. As such, timer(s) may count the exit events (and/or the amount of time the PSU has been at idle per operation 310) and if the exit rate is low enough (e.g., as determined by logic 140 at operation 312 or otherwise based on a comparison against a threshold value), PSU exits the low power mode (like S9) at 312. Also, if the entry rate (e.g., versus exit rate) is too high at operation 306 (e.g., as determined based on some counter/timer and its comparison with some threshold value), entry into the low power consumption state is delayed (or even canceled in an embodiment).

To this end, some embodiments allow for adding of a detection mechanism on the CPU side (e.g., logic 140) to tie deep C-states (like S9) and provide a communication system to the PSU, e.g., to postpone sleep exit until the PSU is ready to sustain the high power requirements.

Fig. 4 illustrates a block diagram of a computing system 400 in accordance with an embodiment of the invention. The computing system 400 may include one or more central processing unit(s) (CPUs) or processors 402-1 through 402-P (which may be referred to herein as "processors 402" or "processor 402"). The processors 402 may communicate via an interconnection network (or bus) 404. The processors 402 may include a general purpose processor, a network processor (that processes data communicated over a computer network 403), or other types of a processor (including a reduced instruction set computer (RISC) processor or a complex instruction set computer (CISC)). Moreover, the processors 402 may have a single or multiple core design. The processors 402 with a multiple core design may integrate different types of processor cores on the same integrated circuit (IC) die. Also, the processors 402 with a multiple core design may be implemented as symmetrical or asymmetrical multiprocessors. In an embodiment, one or more of the processors 402 may be the same or similar to the processors 102 of Fig. 1. In some embodiments, one or more of the processors 402 may include one or more of the cores 106, logic 140, one or more timers (such as discussed with reference to Fig. 3), and sensor(s) 150, of Fig. 1. Also, the operations discussed with reference to Figs. 1-5 may be performed by one or more components of the system 400. For example, a voltage regulator (such as VR 130 of Fig. 1) may regulate voltage supplied to one or more components of Fig. 4 at the direction of logic 140.

A chipset 406 may also communicate with the interconnection network 404. The chipset 406 may include a graphics and memory control hub (GMCH) 408. The GMCH 408 may include a memory controller 410 that communicates with a memory 412. The memory 412 may store data, including sequences of instructions that are executed by the processor 402, or any other device included in the computing system 400. In one embodiment of the invention, the memory 412 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk. Additional devices may communicate via the interconnection network 404, such as multiple CPUs and/or multiple system memories.

The GMCH 408 may also include a graphics interface 414 that communicates with a graphics accelerator 416. In one embodiment of the invention, the graphics interface 414 may communicate with the graphics accelerator 416 via an accelerated graphics port (AGP). In an embodiment of the invention, a display (such as a flat panel display, a cathode ray tube (CRT), a projection screen, etc.) may communicate with the graphics interface 414 through, for example, a signal converter that translates a digital representation of an image stored in a storage device such as video memory or system memory into display signals that are interpreted and displayed by the display. The display signals produced by the display device may pass through various control devices before being interpreted by and subsequently displayed on the display.

A hub interface 418 may allow the GMCH 408 and an input/output control hub (ICH) 420 to communicate. The ICH 420 may provide an interface to I/O devices that communicate with the computing system 400. The ICH 420 may communicate with a bus 422 through a peripheral bridge (or controller) 424, such as a peripheral component interconnect (PCI) bridge, a universal serial bus (USB) controller, or other types of peripheral bridges or controllers. The bridge 424 may provide a data path between the processor 402 and peripheral devices. Other types of topologies may be utilized. Also, multiple buses may communicate with the ICH 420, e.g., through multiple bridges or controllers. Moreover, other peripherals in communication with the ICH 420 may include, in various embodiments of the invention, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 422 may communicate with an audio device 426, one or more disk drive(s) 428, and one or more network interface device(s) 430 (which is in communication with the computer network 403). Other devices may communicate via the bus 422. Also, various components (such as the network interface device 430) may communicate with the GMCH 408 in some embodiments of the invention. In addition, the processor 402 and the GMCH 408 may be combined to form a single chip. Furthermore, the graphics accelerator 416 may be included within the GMCH 408 in other embodiments of the invention.

Furthermore, the computing system 400 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 428), a floppy disk, a compact disk ROM (CD-ROM), a digital versatile disk (DVD), flash memory, a magnetooptical disk, or other types of nonvolatile machine-readable media that are capable of storing electronic data (e.g., including instructions). In an embodiment, components of the system 400 may be arranged in a point-to-point (PtP) configuration. For example, processors, memory, and/or input/output devices may be interconnected by a number of point-to-point interfaces.

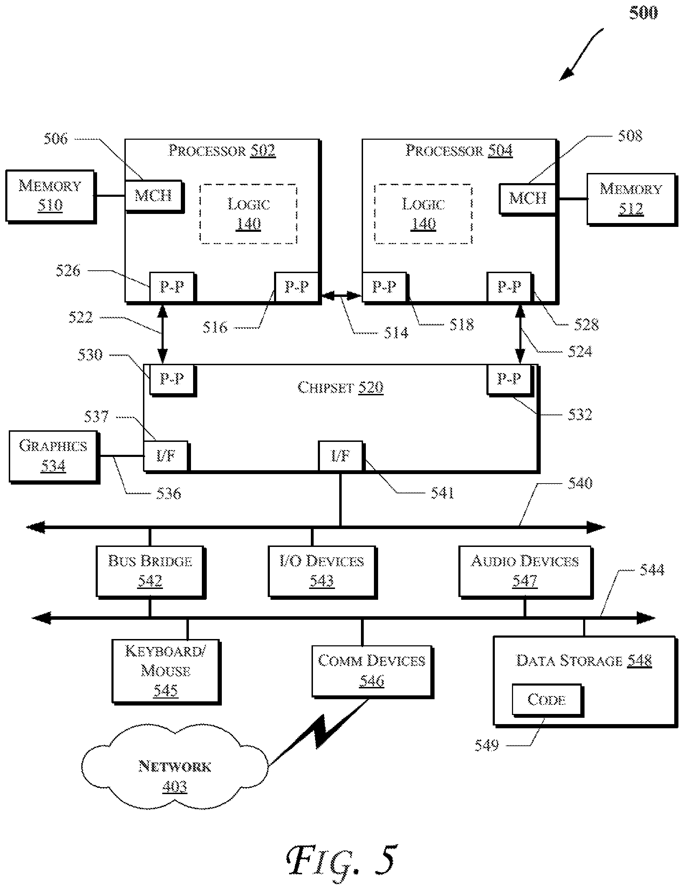

Fig. 5 illustrates a computing system 500 that is arranged in a point-to-point (PtP) configuration, according to an embodiment of the invention. In particular, Fig. 5 shows a system where processors, memory, and input/output devices are interconnected by a number of point-to-point interfaces. The operations discussed with reference to Figs. 1-4 may be performed by one or more components of the system 500. For example, a voltage regulator (such as VR 130 of Fig. 1) may regulate voltage supplied to one or more components of Fig. 5.

As illustrated in Fig. 5, the system 500 may include several processors, of which only two, processors 502 and 504 are shown for clarity. The processors 502 and 504 may each include a local memory controller hub (MCH) 506 and 508 to enable communication with memories 5 10 and 512. The memories 510 and/or 512 may store various data such as those discussed with reference to the memory 412 of Fig. 4. Also, the processors 502 and 504 may include one or more of the cores 106, logic 140, one or more timers (such as discussed with reference to Fig. 3), and/or sensor(s) 150 of Fig. 1.

In an embodiment, the processors 502 and 504 may be one of the processors 402 discussed with reference to Fig. 4. The processors 502 and 504 may exchange data via a point-to-point (PtP) interface 514 using PtP interface circuits 516 and 518, respectively. Also, the processors 502 and 504 may each exchange data with a chipset 520 via individual PtP interfaces 522 and 524 using point-to-point interface circuits 526, 528, 530, and 532. The chipset 520 may further exchange data with a high-performance graphics circuit 534 via a high-performance graphics interface 536, e.g., using a PtP interface circuit 537.

In at least one embodiment, one or more operations discussed with reference to Figs. 1-5 may be performed by the processors 502 or 504 and/or other components of the system 500 such as those communicating via a bus 540. Other embodiments of the invention, however, may exist in other circuits, logic units, or devices within the system 500 of Fig. 5. Furthermore, some embodiments of the invention may be distributed throughout several circuits, logic units, or devices illustrated in Fig. 5.

Chipset 520 may communicate with the bus 540 using a PtP interface circuit 541. The bus 540 may have one or more devices that communicate with it, such as a bus bridge 542 and I/O devices 543. Via a bus 544, the bus bridge 542 may communicate with other devices such as a keyboard/mouse 545, communication devices 546 (such as modems, network interface devices, or other communication devices that may communicate with the computer network 403), audio I/O device, and/or a data storage device 548. The data storage device 548 may store code 549 that may be executed by the processors 502 and/or 504.

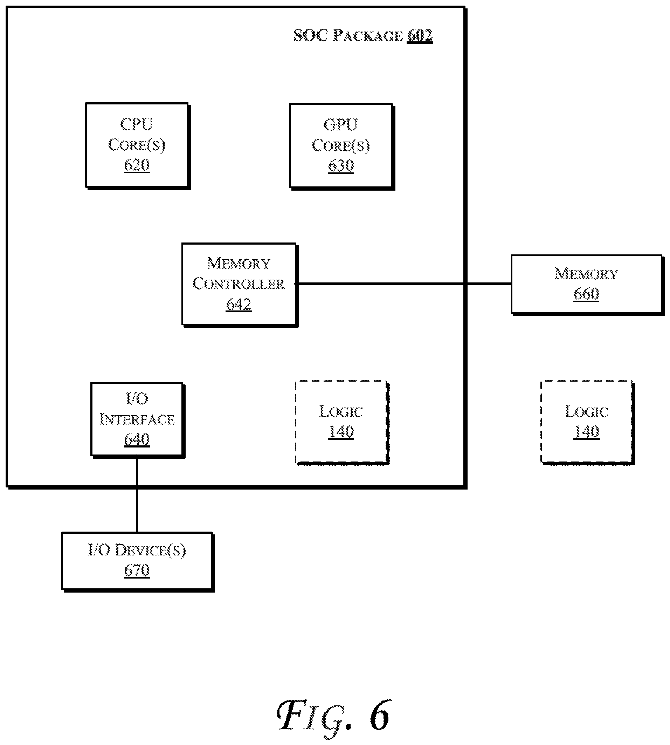

In some embodiments, one or more of the components discussed herein can be embodied as a System On Chip (SOC) device. Fig. 6 illustrates a block diagram of an SOC package in accordance with an embodiment. As illustrated in Fig. 6, SOC 602 includes one or more Central Processing Unit (CPU) cores 620, one or more Graphics Processor Unit (GPU) cores 630, an Input/Output (I/O) interface 640, and a memory controller 642. Various components of the SOC package 602 may be coupled to an interconnect or bus such as discussed herein with reference to the other figures. Also, the SOC package 602 may include more or less components, such as those discussed herein with reference to the other figures. Further, each component of the SOC package 620 may include one or more other components, e.g., as discussed with reference to the other figures herein. In one embodiment, SOC package 602 (and its components) is provided on one or more Integrated Circuit (IC) die, e.g., which are packaged into a single semiconductor device.

As illustrated in Fig. 6, SOC package 602 is coupled to a memory 660 (which may be similar to or the same as memory discussed herein with reference to the other figures) via the memory controller 642. In an embodiment, the memory 660 (or a portion of it) can be integrated on the SOC package 602.

The I/O interface 640 may be coupled to one or more I/O devices 670, e.g., via an interconnect and/or bus such as discussed herein with reference to other figures. I/O device(s) 670 may include one or more of a keyboard, a mouse, a touchpad, a display, an image/video capture device (such as a camera or camcorder/video recorder), a touch screen, a speaker, or the like. Furthermore, SOC package 602 may include/integrate the logic 140 in an embodiment. Alternatively, the logic 140 may be provided outside of the SOC package 602 (i.e., as a discrete logic).

In various embodiments of the invention, the operations discussed herein, e.g., with reference to Figs. 1-6, may be implemented as hardware (e.g., logic circuitry), software, firmware, or combinations thereof, which may be provided as a computer program product, e.g., including a tangible machine-readable or computer-readable medium having stored thereon instructions (or software procedures) used to program a computer to perform a process discussed herein. The machine-readable medium may include a storage device such as those discussed with respect to Figs. 1-6.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments of the invention, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

Thus, although embodiments of the invention have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. A platform comprising:
a processor (102) and one or more components, the processor (102) comprising:
logic (140), at least a portion of which is in hardware, to cause a power supply unit (120) to enter a lower power consumption state during a platform low power consumption state that allows for a wake up latency in the range of tens to hundreds of milliseconds;
wherein the logic is to cause the power supply unit to enter the lower power consumption state based on power state information available from the platform, corresponding to the one or more components and the processor, and comparison of a first value to a first threshold value,
wherein said power state information corresponds at least to information indicating that the processor has entered a low power consumption state;
wherein the first value is a time since a last entry into the lower power consumption state;
wherein the lower power consumption state is to allow for functionality of one or more lower power activities by at least one of the one or more components and the lower power consumption state is not to drive full power or full performance activity by at least one of the one or more components; and
wherein at least a second portion of the logic is in hardware to block activation of the processor until the power supply unit (12) is ready for activating the processor into a power consumption state wherein the power consumption associated with said power consumption state is higher than the power consumption in said low power consumption state.

2. The platform of claim 1, comprising logic (140), at least a portion of which is in hardware, to cause the power supply unit (120) to exit the lower power consumption state based on an indication to exit the lower power consumption state.

3. The platform of claim 2, wherein the indication is to comprise one or more of: a signal, expiration of a timer, and comparison of a second value to a second threshold value.

4. The platform of claim 3, wherein the second value is to correspond to a frequentness of exit from the lower power consumption state.

5. The platform of claim 1, wherein the lower power consumption state is to allow for a wake up latency in a range of about tens to about hundreds of milliseconds.

6. The platform of claim 1, further comprising one or more sensors to detect variations in one or more of: temperature, operating frequency, operating voltage, and power consumption.

7. The platform of claim 1, wherein the logic (140) communicates the lower power state to the PSU via a signaling mode.

8. A method comprising:
causing a power supply unit (120) to enter a lower power consumption state during a platform low power consumption state that allows for a wake up latency in the range of tens to hundreds of milliseconds, the platform comprising a processor and one or more components;
wherein causing the power supply unit to enter the lower power consumption state is based on power state information available from the platform, corresponding to the one or more components and the processor (102), and comparison of a first value to a first threshold value,
wherein said power state information corresponds at least to information indicating that the processor has entered a low power consumption state;
wherein the first value is a time since a last entry into the lower power consumption state;
wherein the lower power consumption state is to allow for functionality of one or more lower power activities by at least one of the one or more components and the lower power consumption state is not to drive full power or full performance activity by at least one of the one or more components; and
blocking activation of the processor until the power supply unit (12) is ready for activating the processor into a power consumption state wherein the power consumption associated with said power consumption state is higher than the power consumption in said low power consumption state.

9. The method of claim 8, further comprising causing the power supply unit (120) to exit the lower power consumption state based on an indication to exit the lower power consumption state.

10. The method of claim 9, wherein the indication is to comprise one or more of: a signal, expiration of a timer, and comparison of a second value to a second threshold value.

11. The method of claim 10, wherein the second value corresponds to a time since a last exit from the lower power consumption state.

12. The method of claim 8, wherein causing the power supply unit to enter the lower power consumption comprises communicating the lower power consumption state to the PSU via a signaling mode.

13. Computer-readable storage including computer-readable instructions, which, when executed by a computer, cause said computer to carry out a method as claimed in any of claims 8-12.

## Patentansprüche

1. Plattform, umfassend:
einen Prozessor (102) und eine oder mehrere Komponenten, wobei der Prozessor (102) umfasst:
Logik (140), von der wenigstens ein Teil in Hardware ist, zum Veranlassen einer Leistungsversorgungseinheit (120) zum Eintreten in einen Zustand niedrigeren Leistungsverbrauchs während eines Zustands niedrigen Leistungsverbrauchs einer Plattform, der eine Aufwachlatenz im Bereich von dutzenden bis hunderten Millisekunden ermöglicht;
wobei die Logik zum Veranlassen der Leistungsversorgungseinheit zum Eintreten in den Zustand niedrigeren Leistungsverbrauchs basierend auf von der Plattform verfügbaren Leistungszustandsinformationen, die der einen oder den mehreren Komponenten und dem Prozessor entsprechen, und einem Vergleich eines ersten Wertes mit einem ersten Schwellenwert ist,
wobei die Leistungszustandsinformationen wenigstens Informationen entsprechen, die anzeigen, dass der Prozessor in einen Zustand niedrigen Leistungsverbrauchs eingetreten ist;
wobei der erste Wert eine Zeit seit einem letzten Eintritt in den Zustand niedrigeren Leistungsverbrauchs ist;
wobei der Zustand niedrigeren Leistungsverbrauchs zum Ermöglichen von Funktionalität einer oder mehrerer Aktivitäten bei niedrigerer Leistung durch mindestens eine der einen oder der mehreren Komponenten ist, und der Zustand niedrigeren Leistungsverbrauchs nicht zum Betreiben von Aktivität bei voller Leistung oder voller Performance durch mindestens eine der einen oder der mehreren Komponenten ist; und
wobei wenigstens ein zweiter Teil der Logik in Hardware ist, um Aktivierung des Prozessors zu blockieren, bis die Leistungsversorgungseinheit (12) zum Versetzen des Prozessors in einen Leistungsverbrauchszustand bereit ist, wobei der Leistungsverbrauch, der mit dem Leistungsverbrauchszustand assoziiert ist, höher als der Leistungsverbrauch im Zustand niedrigeren Leistungsverbrauchs ist.

2. Plattform nach Anspruch 1, umfassend Logik (140), von der wenigstens ein Teil in Hardware ist, zum Veranlassen der Leistungsversorgungseinheit (120) zum Verlassen des Zustands niedrigeren Leistungsverbrauchs basierend auf einer Anzeige zum Verlassen des Zustands niedrigeren Leistungsverbrauchs.

3. Plattform nach Anspruch 2, wobei die Anzeige so ist, dass sie eines oder mehrere umfasst von: einem Signal, einem Ablauf eines Zeitgebers und einem Vergleich eines zweiten Wertes mit einem zweiten Schwellenwert.

4. Plattform nach Anspruch 3, wobei der zweite Wert einer Häufigkeit des Austretens aus dem Zustand niedrigeren Leistungsverbrauchs entspricht.

5. Plattform nach Anspruch 1, wobei der Zustand niedrigeren Leistungsverbrauchs zum Ermöglichen einer Aufwachlatenz in einem Bereich von etwa dutzenden bis etwa hunderten Millisekunden ist.

6. Plattform nach Anspruch 1, ferner umfassend ein oder mehrere Sensoren zum Erkennen von Änderungen eines oder mehrerer von: Temperatur, Betriebsfrequenz, Betriebsspannung und Leistungsverbrauch.

7. Plattform nach Anspruch 1, wobei die Logik (140) den Zustand niedrigerer Leistung durch einen Signalisierungsmodus an die PSU kommuniziert.

8. Verfahren, umfassend:
Veranlassen einer Leistungsversorgungseinheit (120) zum Eintreten in einen Zustand niedrigeren Leistungsverbrauchs während eines Zustands niedrigen Leistungsverbrauchs einer Plattform, der eine Aufwachlatenz im Bereich von dutzenden bis hunderten Millisekunden ermöglicht, wobei die Plattform einen Prozessor und eine oder mehrere Komponenten umfasst;
wobei das Veranlassen der Leistungsversorgungseinheit zum Eintreten in den Zustand niedrigeren Leistungsverbrauchs auf von der Plattform verfügbaren Leistungszustandsinformationen, die der einen oder den mehreren Komponenten und dem Prozessor (102) entsprechen, und einem Vergleich eines ersten Wertes mit einem ersten Schwellenwert basiert,
wobei die Leistungszustandsinformationen wenigstens Informationen entsprechen, die anzeigen, dass der Prozessor in einen Zustand niedrigen Leistungsverbrauchs eingetreten ist;
wobei der erste Wert eine Zeit seit einem letzten Eintritt in den Zustand niedrigeren Leistungsverbrauchs ist;
wobei der Zustand niedrigeren Leistungsverbrauchs zum Ermöglichen von Funktionalität einer oder mehrerer Aktivitäten bei niedrigerer Leistung durch mindestens eine der einen oder der mehreren Komponenten ist, und der Zustand niedrigeren Leistungsverbrauchs nicht zum Betreiben von Aktivität bei voller Leistung oder voller Performance durch mindestens eine der einen oder der mehreren Komponenten ist; und
Blockieren von Aktivierung des Prozessors, bis die Leistungsversorgungseinheit (12) zum Versetzen des Prozessors in einen Leistungsverbrauchszustand bereit ist, wobei der Leistungsverbrauch, der mit dem Leistungsverbrauchszustand assoziiert ist, höher als der Leistungsverbrauch im Zustand niedrigeren Leistungsverbrauchs ist.

9. Verfahren nach Anspruch 8, ferner umfassend ein Veranlassen der Leistungsversorgungseinheit (120) zum Verlassen des Zustands niedrigeren Leistungsverbrauchs basierend auf einer Anzeige zum Verlassen des Zustands niedrigeren Leistungsverbrauchs.

10. Verfahren nach Anspruch 9, wobei die Anzeige so ist, dass sie eines oder mehrere umfasst von: einem Signal, einem Ablauf eines Zeitgebers und einem Vergleich eines zweiten Wertes mit einem zweiten Schwellenwert.

11. Verfahren nach Anspruch 10, wobei der zweite Wert einer Zeit seit einem letzten Austritt aus dem Zustand niedrigeren Leistungsverbrauchs entspricht.

12. Verfahren nach Anspruch 8, wobei das Veranlassen der Leistungsversorgungseinheit zum Eintreten in den Zustand niedrigeren Leistungsverbrauchs ein Kommunizieren des Zustands niedrigeren Leistungsverbrauchs durch einen Signalisierungsmodus an die PSU umfasst.

13. Computerlesbares Speichermedium, umfassend computerlesbare Anweisungen, die bei Ausführung durch einen Computer den Computer zum Durchführen des Verfahrens nach einem der Ansprüche 8 bis 12 veranlassen.

## Revendications

1. Plate-forme comportant :
un processeur (102) et un ou plusieurs composants, le processeur (102) comportant :
une logique (140), dont au moins une partie est sous forme matérielle, servant à amener une unité (120) d'alimentation électrique à entrer dans un état de consommation électrique plus faible pendant un état de faible consommation électrique de la plate-forme qui autorise une latence de réveil dans la plage allant des dizaines aux centaines de millisecondes ;
la logique servant à amener l'unité d'alimentation électrique à entrer dans l'état de consommation électrique plus faible d'après des informations d'état de puissance disponibles en provenance de la plate-forme, correspondant au(x) composant(s) et au processeur, et une comparaison d'une première valeur à une première valeur seuil,
lesdites informations d'état de puissance correspondant au moins à des informations indiquant que le processeur est entré dans un état de faible consommation électrique ;
la première valeur étant un temps depuis une dernière entrée dans l'état de consommation électrique plus faible ;
l'état de consommation électrique plus faible servant à permettre une fonctionnalité d'une ou plusieurs activités à plus faible puissance par le composant ou au moins un des composants et l'état de consommation électrique plus faible ne servant pas à commander une activité à pleine puissance ou à pleines performances par le composant ou au moins un des composants ; et
au moins une deuxième partie de la logique étant sous forme matérielle pour bloquer l'activation du processeur jusqu'à ce que l'unité d'alimentation électrique (12) soit prête pour activer le processeur vers un état de consommation électrique, la consommation électrique associée audit état de consommation électrique étant supérieure à la consommation électrique dans ledit état de faible consommation électrique.

2. Plate-forme selon la revendication 1, comportant une logique (140) dont au moins une partie est sous forme matérielle, servant à amener l'unité (120) d'alimentation électrique à sortir de l'état de consommation électrique plus faible d'après une indication de sortie de l'état de consommation électrique plus faible.

3. Plate-forme selon la revendication 2, l'indication devant comporter un ou plusieurs éléments parmi : un signal, l'expiration d'un temporisateur, et une comparaison d'une deuxième valeur à une deuxième valeur seuil.

4. Plate-forme selon la revendication 3, la deuxième valeur devant correspondre à une fréquence de sortie de l'état de consommation électrique plus faible.

5. Plate-forme selon la revendication 1, l'état de consommation électrique plus faible servant à autoriser une latence de réveil dans une plage allant de quelques dizaines à quelques centaines de millisecondes.

6. Plate-forme selon la revendication 1, comportant en outre un ou plusieurs capteurs pour détecter des variations dans une ou plusieurs grandeurs parmi : la température, la fréquence de fonctionnement, la tension de fonctionnement et la consommation électrique.

7. Plate-forme selon la revendication 1, la logique (140) communiquant l'état de plus faible puissance à la PSU via un mode de signalisation.

8. Procédé comportant les étapes consistant à :
amener une unité (120) d'alimentation électrique à entrer dans un état de consommation électrique plus faible pendant un état de faible consommation électrique de la plate-forme qui autorise une latence de réveil dans la plage allant des dizaines aux centaines de millisecondes. la plate-forme comportant un processeur et un ou plusieurs composants ;
le fait d'amener l'unité d'alimentation électrique à entrer dans l'état de consommation électrique plus faible étant basé sur des informations d'état de puissance disponibles en provenance de la plate-forme, correspondant au(x) composant(s) et au processeur (102), et une comparaison d'une première valeur à une première valeur seuil,
lesdites informations d'état de puissance correspondant au moins à des informations indiquant que le processeur est entré dans un état de faible consommation électrique ;
la première valeur étant un temps depuis une dernière entrée dans l'état de consommation électrique plus faible ;
l'état de consommation électrique plus faible servant à permettre une fonctionnalité d'une ou plusieurs activités à plus faible puissance par le composant ou au moins un des composants et l'état de consommation électrique plus faible ne servant pas à commander une activité à pleine puissance ou à pleines performances par le composant ou au moins un des composants ; et
bloquer l'activation du processeur jusqu'à ce que l'unité d'alimentation électrique (12) soit prête pour activer le processeur vers un état de consommation électrique, la consommation électrique associée audit état de consommation électrique étant supérieure à la consommation électrique dans ledit état de faible consommation électrique.

9. Procédé selon la revendication 8, comportant en outre l'étape consistant à amener l'unité (120) d'alimentation électrique à sortir de l'état de consommation électrique plus faible d'après une indication de sortie de l'état de consommation électrique plus faible.

10. Procédé selon la revendication 9, l'indication devant comporter un ou plusieurs éléments parmi : un signal, l'expiration d'un temporisateur, et une comparaison d'une deuxième valeur à une deuxième valeur seuil.

11. Procédé selon la revendication 10, la deuxième valeur correspondant à un temps depuis une dernière sortie de l'état de consommation électrique plus faible.

12. Procédé selon la revendication 8, le fait d'amener l'unité d'alimentation électrique à adopter la consommation électrique plus faible comportant la communication de l'état de consommation électrique plus faible à la PSU via un mode de signalisation.

13. Stockage lisible par ordinateur comprenant des instructions lisibles par ordinateur qui, lorsqu'elles sont exécutées par un ordinateur, amènent ledit ordinateur à réaliser un procédé selon l'une quelconque des revendications 8 à 12.
